# EUROPEAN PATENT APPLICATION

(11) **EP 3 051 385 A1**
(43) Date of publication of application: **03.08.2016**
(21) Application number: 15153183.7
(22) Date of filing: 30.01.2015
(51) Int. Cl.: G06F 3/01

(54) **Method and system for object detection**

(71) Applicant: 4tiitoo GmbH, 80331 München (DE)
(72) Inventor: Meyer, Tore, 80337 Munich (DE); Odörfer, Stephan, 80802 Munich (DE)
(74) Representative: Qip Patentanwälte Dr. Kuehn & Partner mbB

(57) **Abstract**

A method for object detection comprises: receiving first sensor data (32) of a sensor (22, 24, 26, 28) observing a real scene comprising a real object (34), the first sensor data acquired at a first time instant; generating first object data (36) of the real object by performing an object detection algorithm on the first sensor data (32); identifying an object model (38) stored in a database (42) based on the first object data (36), the database (42) storing a plurality of predefined object models (38); including the identified object model (38) into an environment model (40) modeling the real scene, the environment model (40) comprising a position and/or an orientation of the real object (34) determined from the first object data (36); receiving second sensor data (32) of a sensor (22, 24, 26, 28) observing the real scene, the second sensor data (32) acquired at a second time instant; generating second object data (36) of the real object (34) by performing an object detection algorithm on the second sensor data (32); and identifying the second object data (36) with the identified object model (38) based on a position and/or orientation of the real object (34) determined from the second object data (36).

## Description

### FIELD OF THE INVENTION

The invention relates to a method, a computer program and a computer-readable medium for object detection. Furthermore, the invention relates to an object detection system.

### BACKGROUND OF THE INVENTION

Computers are getting more and more input about the environment by sensors like gaze tracking, 3D cameras, directional audio capture, accelerometers, compasses, etc. Depending on the type of sensor, the "understanding" of this input by the computer is substantially inferior to the capabilities of the human brain even if the quality of input signals sometimes already supersedes human sensors in selected dimensions. One of the major challenges is "making sense" of the data especially if conditions are not ideal. While an open hand can be detected fairly stable in front of most depth/3D cameras, a close fist is already creating a challenge.

### DESCRIPTION OF THE INVENTION

For example, when an object detection algorithm evaluates the input from a video stream provided by a camera, a detected hand may be lost, when the opened hand is turned into a position such that the camera views the hand from the side or when the hand is made to a fist. The object detection algorithm will not detect the hand until it is turned into a front position or when it is opened again. In such a way, objects seem to vanish and reappear for processes or methods receiving the output of the object detection algorithm such as gesture detection devices.

It is an object of the invention to provide a more stable and reliable object detection, while not substantially enhancing the power consumption and computing capacity of a device performing the method.

This object is achieved by the subject-matter of the independent claims. Further exemplary embodiments are evident from the dependent claims and the following description.

An aspect of the invention relates to method for object detection. The method completely may be performed by a computer such as a PC, laptop, smartphone or tablet. It has to be understood that the term object detection may refer to any method in which features of a real object are extracted from sensor data of a sensor sensing the real object. Such features, for example, may be edges, corners, outlines, point clouds, etc. The method described herein may enhance object detection by combining at least two single object detections with a set of assumptions, such as specific objects do not move at all and/or that an object does not disappear or appear suddenly.

According to an embodiment of the invention, the method comprises: receiving first sensor data of a sensor observing a real scene comprising a real object, the first sensor data acquired at a first time instant; generating first object data of the real object by performing an object detection algorithm on the first sensor data; identifying an object model stored in a database based on the first object data, the database storing a plurality of predefined object models; including the identified object model into an environment model modeling the real scene, the environment model comprising a position and/or an orientation of the real object determined from the first object data; receiving second sensor data of a sensor observing the real scene, the second sensor data acquired at a second time instant; generating second object data of the real object by performing an object detection algorithm on the second sensor data; and identifying the second object data with the identified object model based on a position and/or orientation of the real object determined from the second object data.

The real scene may be a person in front of a sensor device, or at least a part of a room, in which the person is standing. Real objects of the scene may be the person, parts of the person such as the head, arms, legs, and further elements inside the room such as a desk, a cupboard, etc.

With the method, sensor data (such as camera frames) are acquired from the scene for at least two times. With the sensor data of a first time instant, one or more objects are identified by creating object data with an object detection algorithm and finding a predefined object model in a database that fits to the object data. These first steps may be performed with sensor data of a high-resolution sensor and/or a sensor providing detailed information such as a 3D camera. Furthermore, a highly computing power consuming object detection algorithm may be used.

From the identified object models, an environment model of the real scene is created, which may be used for identifying objects with the aid of the position and/or orientation. The environment model may comprise a map of the identified objects. In general, it may be assumed that an object does only move within physical limits. For example, a desk or cupboard usually does not move at all. Furthermore, it may be assumed that, if an object is detected at a position near a position, at which an object has been identified previously, the same object has been detected.

With the aid of the environment model and with sensor data of a second, later time instant, one or more objects are identified by assuming that the real objects in the scene only have moved within sensible limits. The second sensor data generated with the same or with a different object detection algorithm may be matched to objects already present in the environment model. Here, it may be assumed that a detected object near an object model in the environment model is the same object that only has moved a bit or has changed its shape (such as an opened hand moved into a fist).

These second steps may be performed with sensor data of a second sensor having less resolution as the first sensor of the first steps and/or with a second object detection algorithm consuming less computing power as the first object detection algorithm from the first steps. In such a way, even the electrical power consume of a device performing the object detection method may be reduced.

Even in the case, when the object detection algorithm that is performed on sensor data of a specific time instant is not able to detect an object, the environment model may provide a further process or method such as a gesture detection algorithm with stable input data. The stability of object (incl. human hands, bodies, etc.) and/or gesture detection may be increased.

Furthermore, when the object detection algorithm that is performed on sensor data of a specific time instant makes a false detection, the method may suppress this false detection. For example, even when a hand is (wrongly) detected at a position, where a bottle has situated before, the method may decide with the aid of the environment model that this detection may be wrong. The method may reduce false positive detections, in particular in difficult situations.

Usually, the first and/or second sensor data may be acquired regularly. For example, the sensor data may be frames from a video stream. The above-mentioned first steps, in which the environment model is supplemented with the detected object, may be performed with a one or more first frames of a video stream, the second steps, in which the environment model is updated, may be performed regularly with subsequent frames of the video stream. In general, the object (model) would not necessarily be added to the environment model based on a first detection, but be validated e.g. based on recognition in multiple frames, certainty measures from the detection algorithms, etc.

The object detection algorithm is used for determining object data from sensor data. Sensor data may be seen as raw data as provided by the sensor, such as a 2D pixel image from a camera. First and second object data, i.e. the output of an object detection algorithm, may be a point cloud of features (such as edges) of the object, a wireframe model, a triangulated volume mode and/or higher level descriptions of the object like type, center of gravity, orientation and/or state.

The database storing the object models may be any set of organized data, such as a relational database or a specific formatted file. For example, the object models stored in the database may be wireframe models, triangulated volume models and/or one or more higher level descriptions. As an example, when the object data generated by the object model is a wireframe model, the object data of a detected opened hand may be a wireframe of five lines having one end point in common. In the database, a wireframe model also having five lines may be stored for the object "opened hand". Since the topological features of object data and the object model are equal (five lines having one common point), the method may conclude that an opened hand has been detected.

According to an embodiment of the invention, the method further comprises: identifying the second object data with the identified object, when a difference between the position and/or orientation determined from the first object data and the position and/or orientation determined from the second object data fits to a physical property of the real object stored with the predefined object model. A physical property may be at least one of: a maximal speed, a maximal acceleration, a range of orientations, a volume, an outer shape. For example, it may be determined, whether an object in the environment model could have been moved to the new position and/or new orientation based on the one or more physical properties stored with the object model in the database. From the time difference between the first and second time instant and the positions and/or orientations, a (angular and/or linear) speed may be calculated and may be compared to a expected range of speeds of this object.

It also may be possible that with one or more physical properties, the movement of the object model in the environment model is predicted and the predicted position and/or predicted orientation may be compared with the position and/or orientation determined from the second sensor data. The method may apply laws of physics to the object models in the environment model.

According to an embodiment of the invention, the method further comprises: determining a sensor position and/or sensor orientation of the sensor acquiring the first sensor data and/or the second sensor data; und updating the position and/or orientation of identified objects in the environment model based on a change of the sensor position and/or sensor orientation. Also movements of the sensor, which, for example, may be included into a portable device, may be considered for updating the environment model. For example, a portable device may comprise an acceleration and/or gyro sensor, which may provide data of the sensor position and/or sensor orientation.

According to an embodiment of the invention, the identified object model comprises different geometrical configuration states of the real object and a geometrical configuration state of the real object is identified from the first object data. In general, flexible objects may change their outer form over time. For example, an opened hand may be closed into a fist and vice versa. When the real object is a hand, the geometrical configuration states may be selected from: an opened hand, a fist, a hand with one or more outstretched fingers. When the real object is a human body, the geometrical configuration states may be selected from: arms resting besides body, both or one of the arms outstretching from the body.

A geometrical configuration state may be seen as a changed outer form of the same real object. In particular, real object with joints, such as hands or a human body with arms, may change its geometrical configuration state during movement. Many object detection algorithms have problems in identifying the same object, which only has changed its configuration. By identifying a detected object with an object at (or at least near) an object model at the same position and/or orientation, the method may detect geometrical configuration state changes that would not be detectable with an object detection algorithm that only evaluates sensor data acquired at one time instant.

According to an embodiment of the invention, it is determined from the second object data that an object is present, which fits to the position and/or orientation of the predefined object model identified with the first object data, wherein geometrical configuration states of the predefined object model are compared with the second object data for determining whether the second object data is identified with the identified object model. In one case, it firstly may be assumed that an object that has been detected at (or at least near) an object model in the environment model at the same position and/or orientation is the same object, but only has changed its configuration. In this case, the geometrical configuration state of the identified object model may be changed to another geometrical configuration state of the same object model based on the second sensor data. Only in the case, when the detected object cannot be identified with one of the geometrical configuration states of the object model, the detected object may be compared with all object models stored in the database.

According to an embodiment of the invention, the first sensor data is acquired with a first sensor and the second sensor data is acquired with a second sensor different from the first sensor. The method can be further enhanced by combining the inputs of multiple sensors. For example, the first object detection may be performed with a first sensor having a higher resolution and/or providing additional information as a second sensor. Examples may be a 3D camera as first sensor and a 2D camera as second sensor, a color camera as first sensor and a greyscale camera as second sensor, etc.

The first and second sensors may differ in type. For example, an initial recognition (the first steps) may be performed with a 3D camera with active lighting. The subsequent (second) steps may be performed with a 2D camera and 2D image recognition.

It has to be understood that, when the object detection during the second steps fails, it may be switched back to the object detection with the first sensor, i.e. the first steps of the method. For example, the 3D camera may be reactivated, when the object detection with the 2D camera fails.

Alternatively, the first and second sensor data may be acquired by the same sensor. However, in this case, the sampling rates and/or extent of processing of the second sensor data of the sensor may be reduced compared to the first sensor data.

According to an embodiment of the invention, the first object data is generated with a first object detection algorithm and the second object data is generated with a second object detection algorithm different from the first object detection algorithm. The second object detection algorithm, which may produce less accurate results as the first object detection algorithm, may be supported with the information from the environment model, such as an expected object at a specific position/orientation and/or possible configuration states of an object. This may reduce the required processing on sensor inputs.

Object detection algorithms may be provided by middleware software packages, such as provided under gestigon (tm), Metrilus (tm) or Intel RealSense (tm).

According to an embodiment of the invention, wherein the first sensor and/or the second sensor are at least one of: a camera, a 3D camera, a 2D camera, an acceleration sensor, a gyro sensor, a microphone, a gaze tracker.

In particular, the first sensor may be a 3D camera, which is used for identifying the object, which object model is stored in the database. The 3D camera may be based on time of flight and/or on structured light and/or coded light and/or a similar model provided by a special (infrared) light source. The second sensor may be a 2D camera, which frames are evaluated as second sensor data for updating the environment model.

According to an embodiment of the invention, the first sensor and/or the second sensor are a sensor combination, which may comprise at least two of the above mentioned sensors. For example, the first sensor may be a combination of a camera and a directed microphone, wherein the methods identified a person with specific audio characteristics and the second sensor may be the directed microphone alone. As a further example, the first sensor may be a combination of a camera and an acceleration sensor identifying an arm of a person which carries the acceleration sensor. In this case, the second sensor may be the acceleration sensor alone, which may identify the specific arm based on the acceleration.

Furthermore, the first sensor data may be a combination of sensor data provided from two sensors, such as a combination of a video stream with an audio stream, or a combination of a video stream with acceleration sensor data. Analogously, the second sensor data may be a combination of sensor data provided by two sensors.

It also may be possible that the first sensor is an eye tracker, which detects gaze points. In this case, the real objects may be eyes and/or a head. For example, an object model of an eye may be a sphere. The second sensor may be a 2D camera, which is used as long as head positioning and detail image of the eye do not change significantly. This may not result in high precision eye tracking but may reduce energy consumption while the person is looking at areas of the screen, without eye tracking interaction, for example when watching a video and not looking at control elements on the screen. Also, a directed microphone may be used as second sensor, which sensor data is identified with an already identified object model, for example based on the direction of a voice. Furthermore, an acceleration and/or gyro sensor attached to the person may be used as second sensor, which sensor data is identified with an already identified object model, for example based on accelerations and/or changed orientations, which are compared to possible accelerations and/or possible orientations.

According to an embodiment of the invention, the environment model comprises a plurality of object models. It has to be understood that more than one object model is stored in the environment model. For example, also unmovable objects (or their models), such as a desk, items on the desk or in the background of a scene may be stored in the environment model. For every detected object, the second object data may be identified and/or matched with one of the object models from the environment model. The identification may be based on comparing a position and/or orientation of the real object determined from the second object data and a position and/or orientation of an object model in the environment model. This may further reduce the computational needs of the method, since objects identified with unmovable objects or objects that do not have to be considered during further steps (such as a head, which may be ignored by a gesture detection algorithm) do not have to be evaluated further.

Further aspects of the invention relate to a computer program for object detection, which, when being executed by a processor, is adapted to carry out the steps of the method as described in the above and in the following, and to a computer-readable medium, in which such a computer program is stored.

A computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g. the Internet, which allows downloading a program code. In general, the computer-readable medium may be a non-transitory or transitory medium.

A further aspect of the invention relates to an object detection system comprising a sensor for acquiring at least one of the first sensor data and the second sensor data and an object detection device adapted for performing the method as described in the above and in the following. The object detection system, for example, may be provided by a laptop, which may comprise one or more built-in cameras as sensors, such as a 3D camera, a webcam, a (for example directional) microphone, an eye tracker, an acceleration and/or gyro sensor etc.

It has to be understood that features of the method, the computer program and the computer-readable medium as described in the above and in the following may be features of the object detection system as described in the above and in the following, and vice versa.

These and other aspects of the invention will be apparent from and elucidated with reference to the embodiments described hereinafter.

### BRIEF DESCRIPTION OF THE DRAWINGS

Below, embodiments of the present invention are described in more detail with reference to the attached drawings.
Fig. 1 schematically shows an object detection system according to an embodiment of the invention.
Fig. 2 shows an image acquired by a sensor for an object detection system according to an embodiment of the invention.
Fig. 3 schematically shows an environment model used in an object detection system according to an embodiment of the invention.
Fig. 4 schematically shows an object database used in an object detection system according to an embodiment of the invention.
Fig. 5 shows a flow diagram for an object detection method according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

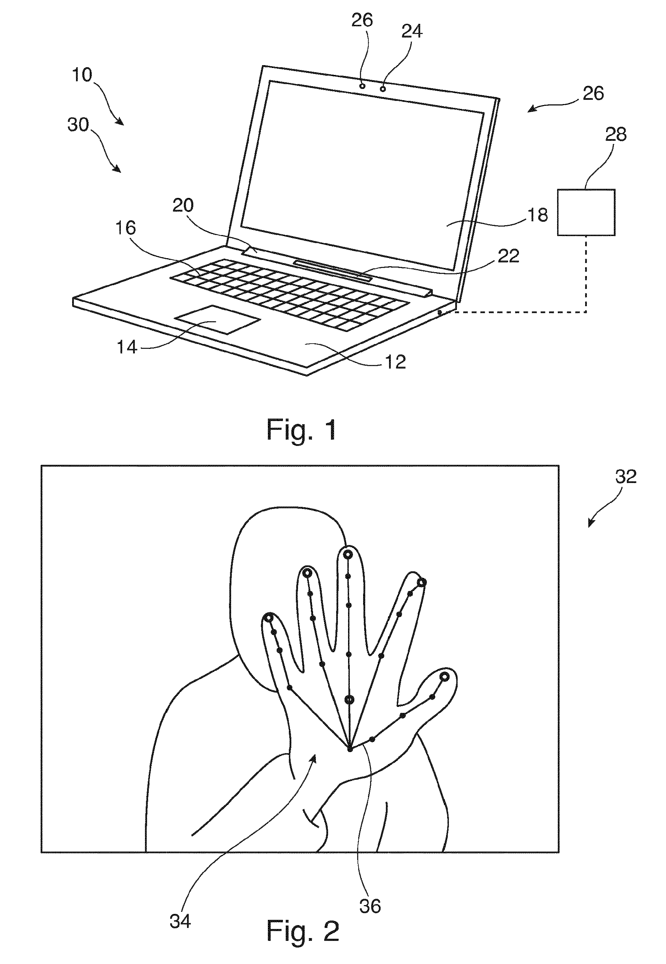

Fig. 1 shows an object detection system 10 with a laptop, which comprises a housing 12, a track pad 14 and a keyboard 16 attached to the housing 12, and a screen 18, which is attached to the housing 12 via a hinge 20. On the hinge 20, a gaze tracker 22 for example comprising an infrared light source and corresponding sensors (a camera) is provided. Furthermore, a 3D camera 24 and a 2D camera 26 is provided above the screen 18. Furthermore, one or more further sensors 28, such as an external 3D camera, a LIDAR device, etc. may be connected to the laptop 10.

A 2D camera 24 may be characterised by producing sensor data that comprises pixel information. A 3D camera 26 may be characterised by producing sensor data that comprises pixel information, wherein every pixel comprises a depth value.

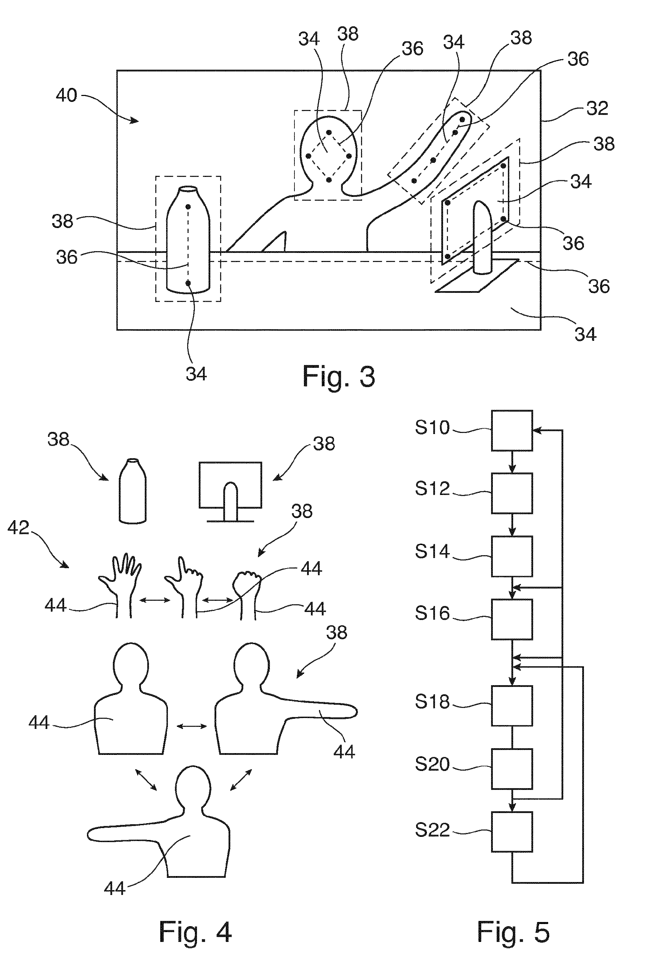

All the sensors 22, 24, 26, 28 connected to the hardware of the laptop 10 provide sensor data, which may be processed by an object detection algorithm performed by software running in the laptop. The hardware of the laptop thus may be seen as object detection device 30. Furthermore, software may run on the laptop/object detection device 30 that enhances the object detection of the object detection algorithm as will be explained with reference to Fig. 5.

Fig. 2 shows an example of sensor data 32, which may be provided by a 3D camera 26. The sensor data 32 has the form of an image, which may be a frame of a video stream from the 3D camera 26, and shows a person raising a hand and an object detection algorithm detects the hand being a real object 34 and constructs a wireframe model 36 representing the detected real object 34. The wireframe model may be seen as object data 36 provided and/or generated by the object detection algorithm.

Fig. 3 shows a further example of sensor data 32, which for example may be provided by a 2D camera 24. The sensor data 32 has the form of an image showing a person behind a table, which image also may be a frame of a video stream from the 2D camera 24. It has to be noted that the sensor data 32 of Fig. 3 as well as the sensor data 32 of Fig. 2 are only shown schematically, since such images usually comprise depth/greyscale information (for example sensor data 32 of Fig. 2) and color information (for example sensor data 32 of Fig. 3).

Fig. 3 shows that more than one real object 34 may be detected, such as a bottle, a head, an arm, a desk and a monitor. The object data 36 generated by the object detection algorithm and/or identified by the object detection method as described herein are represented by dashed lines in Fig. 3.

Furthermore, in Fig. 3, an environment model 40 constructed from the detected objects 34, the object data 36 is shown, which comprises object models 38 of the objects 34. In Fig. 3, the object models 38 are depicted as dashed shapes. The environment model 40 may be constructed in the memory of the object detection device 30. The environment model 40, for each detected object 34, comprises at least a link to an object model 38 stored in an object model database and position and orientation information of the object 34. For example, the environment model 40 may comprise 3D coordinates and rotation matrices encoding the position and orientation of every detected object 34 in space. Furthermore, the environment model 40 may comprise the object data 36 provided by an object detection algorithm and/or may comprise a link to a possibly more abstract object model 38 in the object model database.

It is also possible that the environmental model 40, for at least some of the objects 34 comprise actual physical properties of the objects, such as linear and/or rotational speed and/or acceleration. It also may be possible that further identifying physical properties such as color are stored with every object model 38 in the environment model 40. For example, if the color in the area of an object does not change in the sensor data 32, it may be assumed that the object 34 (such as a desk, table, wardrobe, etc.) has not changed at all.

Fig. 4 shows schematically the content of an object model database 42. In the object model database 42, which also may be stored in the memory of the object detection device 30, object models 38 for a plurality of real objects 34 may be stored, such as a bottle, a monitor, a hand and an upper part of a body. In Fig. 4, the object models 38 are depicted as small pictures, however, the object models 38 may comprise wireframes, triangulated volumes, etc.

Furthermore, the model database 42 may comprise geometrical configuration states 44 of object models 38. Some or all of the object models 38 may comprise one or more geometrical configuration states 44, which indicate different geometrical configurations of the corresponding object 34. For example, objects 34 with joints and/or hinges or flexible objects 34 may change their shape in the real world over time, which different shapes are considered by the geometrical configuration states 44.

In the example shown in Fig. 4, there are different configuration states 44 for the object model 38 of a hand, such as opened hand, hand with outstretched index finger and fist. There are also different configuration states 44 for the object model 38 of a body, such as lowered arms and outstretched left or right arm.

A configuration state 44 of an object model 38 may comprise a wireframe model and/or a triangulated volume model and/or an outlining point cloud, which may identify the object 34 in the specific configuration. For example, the only configuration state 44 of a bottle may be a simple wireframe model comprising two points interconnected by a line. The configuration state 44 "fist" of a hand also may be this simple wireframe model, however stored with the object model 38 of the hand.

It has to be understood that the object model 38 stored in the database 42 may be different from the object data 36 provided by an object detection algorithm. For example, with respect to the object data 36 of Fig. 2, the object detection algorithm may provide a wireframe model which comprises the two or three dimensional coordinates of the end points of the lines. A corresponding object model 38 stored in the database 42 may only comprise a wireframe model that describes the topological structure of the hand, for example only comprising ranges of angles between the lines.

Furthermore, the model database 42 may store assumptions about physical properties together with the object models 38 corresponding to the objects 34. For example, a physical property may be a typical and/or maximum acceleration and/or speed an object 34 is moved in different directions, for example also differentiated between a situation where a person sits or stands in front of the sensor 24, 26. A physical property also may be, whether an object 34 moves at all.

Fig. 5 shows a flow diagram for an object detection method that may be performed by the object detection system 10.

In particular, software may be running in an object detection device 30, which then performs the method of Fig. 5. The object detecting device 30 may be a PC, a laptop or a smartphone. It also may be an embedded device, for example being part of a sensor such as a camera or of virtual reality glasses.

In the following, it is assumed that the first sensor is a 3D camera 26 and that the second sensor is a 2D camera 24. However, it has to be understood that in the present disclosure, in general the first sensor and the second sensor may be selected from one of the sensors 22, 24, 26, 28, when applicable. For example, the first sensor may be the gaze tracker 22 and the second sensor may be the 2D camera 24. As another example, the first sensor may be a LIDAR device 28 and the second sensor may be the 2D camera 24.

In step S10, the first sensor data 32 is received in the object detection device 30, wherein the first sensor data 32 is generated by the first sensor 26 observing a real scene comprising a real object 34.

The first sensor data 32 is acquired at a first time instant. Usually, the first sensor 26 will acquire the first sensor data 32 regularly for a sequence of time instants. For example, the first sensor data 32 may be an image, such as a frame of a video stream. As a further example, it also may be possible that the first sensor data 32 is a point cloud from a LIDAR device.

In steps S12, first object data 32 of the real object 34 is generated by performing an object detection algorithm on the first sensor data 32, which is performed in the object detection device 30. For example, a software package may be installed in the object detection device 30, which receives the first sensor data 32 (for example in the form of an image) and which outputs the first object data 36 (for example in the form of a wireframe model).

In steps S14, an object model 38 stored in the database 42 is identified based on the first object data 36. For example, a pattern matching algorithm may be performed for finding the object model 38 (for example a wireframe model) that best matches the first object data 36 (which also may comprise a wireframe model). In one case, topological structures of the first object data 36 and the object model 38 may be compared.

In step S14, when the identified object model 38 comprises different geometrical configuration states 44, also a geometrical configuration state 44 of the real object 34 may be identified from the first object data 34. For example, the pattern matching algorithm and/or the topological structure compare may be performed on the different configuration states 44 and the best fitting configuration state 44 may be selected.

When it is not possible to identify an object model 38, the method may continue with step S10, for example with a next frame of a video stream. It also may be possible to repeat steps S10 to S14 several times with different first sensor data 32, for example to enhance a probability that the correct object model 38 has been identified.

In step S16, the identified object model 38 is included into the environment model 40. If the corresponding identified object 34 is already present in the environment model 40, the corresponding object model 38 also may be updated, for example by updating the position and/or the orientation of the object.

In step S18, second sensor data 32 of the same sensor 26 or a different, second sensor 24 is received, wherein the second sensor data 32 is acquired at a second time instant. Analogously to the first sensor 26, the second sensor 24 will acquire the second sensor data 32 regularly for a sequence of time instants. For example, the second sensor data 32 may be an image, such as a frame of a video stream.

In step S20, second object data 36 of the real object 34 is generated by performing a second object detection algorithm on the second sensor data 32, which is performed in the object detection device 30. For example, a software package may be installed in the object detection device 30, which receives the second sensor data 32 (for example in the form of an image) and which outputs the second object data 36 (for example in the form of a wireframe model). The second object detection algorithm may be different from the first object detection algorithm from step S12 and in particular may consume less computing resources than the first object detection algorithm.

If it is not possible to detect an object in step S20 from the second object data 36, it may be possible to continue at step S18, for example with a next frame of a video stream of the second sensor 24. It also may be possible to switch back to the first sensor 26 and the first sensor data 32 and/or to the first object detection algorithm and to continue in step S10.

In step S22, the second object data 36 is identified with the identified object model 38 of the corresponding real object 34 based on a position and/or orientation of the real object 34 determined from the second object data 36. In general, it is assumed that, when an object 34 is detected at the same or nearly the same position with optionally the same or nearly same orientation as an object model 38 in the environment model 40, the same object has been detected (without in a first step further comparing or matching the second object data 36 with other object models 38 from the database 40).

The second object data 36 may be associated with an identified object 34, when a difference between the position and/or orientation determined from the first object data 32 and the position and/or orientation determined from the second object data 32 fits to a physical property of the real object stored with the predefined object model. For example, from the physical properties stored with the corresponding object model 38, an actual position and/or orientation may be calculated for the second time instant based on the position and/or orientation at the first time instant. Also a possible range of positions and/or orientations may be determined from a maximal speed and/or maximal acceleration.

For example, in step S22, it may be expected that a hand is present at the position a hand was detected at the first time instant, as long as there is an object in the vicinity of this position and this object has not been removed from this position at a speed, acceleration and/or direction to be expected from a hand.

When an object model 38 is found at the same or nearly the same position as described above, in step S22, it also is possible to change to another configuration state of the same object model 38. The geometrical configuration states 44 of the object model 38 may be compared with the second object data 36 for determining whether the second object data 36 is identified with the configuration states of the object model identified in step S14. In step S22, the identification (such as pattern matching and/or topological compare) between object data 36 and object models 38 may be restricted to the configuration states 34 of one object model 38.

Returning to the example with a hand, if the object 34 changes its size because the hand was made into a fist, the second sensor 24 and second algorithms may have problems exactly detecting the fist. For example, the result would be a fist or bottle with either 50% probability. However, in step S22, a high probability is placed to the hand being turned into a fist rather than the hand being replaced by any other object and thus the configuration state 44 of the object at this position is changed to a hand in fist configuration state.

Summarized, the identified geometrical configuration state 44 of the identified object model 38 may be changed based on the second sensor data, by selecting another configuration state 44 stored in the database 42.

After step S22, the method may continue with step S18 and may process the next set of second sensor data 32, which may be a next frame of a video stream. It also may be possible that after step S22, the method continuous at step S10, when the second sensor data was not identified with an identified object model 38 and/or configuration state 44.

If different sensors and/or different object detection algorithms are used in the first steps S10 to S16 and the second steps S18 to S22, it may be possible to switch between these sensors/algorithms for saving energy and/or computing capacity, while always an object detection is possible. Optionally, if supported by the sensors, this may allow reducing sampling frequency, resolution as well as processing efforts. A not used sensor may be switched off, when not used.

In any case, the environment model 40 and the data stored therein such as the type of object 34, its object model 36, its configuration state 44 and/or its position and or orientation may be provided to subsequent software, which in this way, receives enhanced data with respect to object detection. Such subsequent software may be gaze tracking software and/or gesture detection software.

It also may be possible that the object detection system 10 comprises sensors 22, 24, 26, 28 that are not fixedly connected to the object detection device 30 that is performing the method. In this case, a sensor position and/or sensor orientation of the sensor 22, 24, 26, 28 acquiring the first sensor data and/or the second sensor data may be determined. For example, the first sensor may be a 3D camera or LIDAR device communicatively connected to the laptop. The first and/or second sensor may be provided with a movement sensor for determining the position and/or orientation of the sensor in space. In such a way, when the first sensor is moved, the position and/or orientation of identified object models 38 in the environment model 40 may be recalculated, when the first and/or second sensor is moved with respect to each other.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: object detection system
- 12: housing
- 14: track pad
- 16: keyboard
- 18: screen
- 20: hinge
- 22: gaze tracker
- 24: 2D camera
- 26: 3D camera
- 28: sensor device
- 30: object detection device
- 32: sensor data
- 34: object
- 36: object data
- 38: object model
- 40: environment model
- 42: model database
- 44: configuration state

## Claims

1. A method for object detection, the method comprising:
receiving first sensor data (32) of a sensor (22, 24, 26, 28) observing a real scene comprising a real object (34), the first sensor data acquired at a first time instant;
generating first object data (36) of the real object by performing an object detection algorithm on the first sensor data (32);
identifying an object model (38) stored in a database (42) based on the first object data (36), the database (42) storing a plurality of predefined object models (38);
including the identified object model (38) into an environment model (40) modeling the real scene, the environment model (40) comprising a position and/or an orientation of the real object (34) determined from the first object data (36);
receiving second sensor data (32) of a sensor (22, 24, 26, 28) observing the real scene, the second sensor data (32) acquired at a second time instant;
generating second object data (36) of the real object (34) by performing an object detection algorithm on the second sensor data (32);
identifying the second object data (36) with the identified object model (38) based on a position and/or orientation of the real object (34) determined from the second object data (36).

2. The method of claim 1, further comprising:
identifying the second object data (36) with the identified object (34), when a difference between the position and/or orientation determined from the first object data (36) and the position and/or orientation determined from the second object data (36) fits to a physical property of the real object (34) stored with the predefined object model (36).

3. The method of claim 1 or 2, further comprising:
determining a sensor position and/or sensor orientation of the sensor (22, 24, 26, 28) acquiring the first sensor data (32) and/or the second sensor data (32);
updating the position and/or orientation of identified object models (38) in the environment model (40) based on a change of the sensor position and/or sensor orientation.

4. The method of one of the preceding claims,
wherein the identified object model (38) comprises different geometrical configuration states (44) of the real object (34) and a geometrical configuration state (44) of the real object is identified from the first object data (36).

5. The method of claim 4,
wherein it is determined from the second object data (36) that an object is present, which fits to the position and/or orientation of the predefined object model (38) identified with the first object data (36);
wherein geometrical configuration states (44) of the predefined object model (38) are compared with the second object data (34) for determining whether the second object data (36) is identified with a geometrical configuration state (44) of the identified object model (38).

6. The method of claim 4 or 5, further comprising:
changing the identified geometrical configuration state (44) of the identified object model (38) based on the second sensor data (32).

7. The method of one of the preceding claims,
wherein the real object (34) is a hand, a human body and/or a head.

8. The method of one of the preceding claims,
wherein the first sensor data (32) is acquired with a first sensor (22, 24, 26, 28) and the second sensor data (32) is acquired with a second sensor (22, 24, 26, 28) different from the first sensor.

9. The method of one of the preceding claims,
wherein the first sensor data (32) and/or the second sensor data (32) are frames from a video stream.

10. The method of one of the preceding claims,
wherein the first object data (36) is generated with a first object detection algorithm and the second object data (36) is generated with a second object detection algorithm different from the first object detection algorithm.

11. The method of one of the preceding claims,
wherein the first sensor and/or the second sensor are at least one of or are a combination of at least two of: a camera, a 3D camera (26), a 2D camera (24), an acceleration sensor, a gyro sensor, a microphone, a gaze tracker (22).

12. The method of one of the preceding claims,
wherein the environment model (40) comprises a plurality of object models (38);
wherein the second object data (36) is identified with one of the object models (38) from the environment model (40) and the identification is based on comparing a position and/or orientation of the real object (34) determined from the second object data (36) and a position and/or orientation of an object model (38) in the environment model (40).

13. A computer program for object detection, which, when being executed by a processor, is adapted to carry out the steps of the method of one of claims 1 to 12.

14. A computer-readable medium, in which a computer program according to claim 13 is stored.

15. An object detection system (10), comprising:
a sensor (22, 24, 26, 28) for acquiring at least one of the first sensor data (32) and the second sensor data (32);
an object detection device (30) adapted for performing the method of one of claims 1 to 12.
